# EUROPÄISCHE PATENTSCHRIFT

(11) **EP 1 590 582 B1**
(45) Veröffentlichungstag und Bekanntmachung des Hinweises auf die Patenterteilung: **25.07.2007**
(21) Anmeldenummer: 04707145.1
(22) Anmeldetag: 31.01.2004
(51) Int. Cl.: F16H 45/02, F16D 25/12, E02F 9/22

(54) **ANTRIEBSSTRANG FÜR EIN MOBILFAHRZEUG**
DRIVE TRAIN FOR A MOBILE VEHICLE
CHAINE CINEMATIQUE DE VEHICULE

(30) Priorität: 07.02.2003 DE 10304918
(43) Veröffentlichungstag der Anmeldung: 02.11.2005
(73) Patentinhaber: ZF FRIEDRICHSHAFEN AG, 88038 Friedrichshafen (DE)
(72) Erfinder: LEGNER, Jürgen, 88048 Friedrichshafen (DE)
(86) Internationale Anmeldenummer: PCT/EP2004/000861
(87) Internationale Veröffentlichungsnummer: WO 2004/069571

(56) Entgegenhaltungen:
- DE-A- 4 328 182
- DE-A- 10 201 838
- US-A- 3 789 943
- US-A- 3 896 910
- US-A- 4 004 417
- US-A- 5 040 648

## Beschreibung

Die Erfindung bezieht sich auf einen Antriebsstrang für ein Mobilfahrzeug nach der im Oberbegriff von Anspruch 1 näher definierten Art.

Der gattungsgemäße Antriebsstrang weist einen Verbrennungsmotor auf, welcher einerseits über einen hydrodynamischen Wandler und ein nachgeschaltetes schaltbares Untersetzungsgetriebe die Antriebsräder antreibt, und andererseits mit einem aktivierbaren Verbraucher in Verbindung steht. Häufig wird diese Ausführung in Arbeitsmaschinen, wie beispielsweise Radladern, eingesetzt, bei welchen als Verbraucher eine hydrostatische Pumpe mit der Antriebsmaschine in Wirkverbindung steht und die Lenkung oder das Hubwerk sowie die Schaufel zu dessen Betätigung mit Druckmittel versorgt. Bei der Verwendung dieses Antriebsstrangs für diese Art von Fahrzeugen ist bei der Auslegung des Antriebsmotors und des hydrodynamischen Drehmomentwandlers die Leistung des Nebenabtriebs ebenso von Bedeutung wie die Leistung des Fahrantriebs. Der Antriebsmotor in Kombination mit seinem Drehmomentwandler weist im Regelfall einen steilen Drehmomentanstieg auf, welcher beispielsweise bei 35 % liegen kann, und der Antriebsmotor ist mit seinem Drehmomentwandler so ausgelegt, dass im Festbremspunkt des Fahrzeugs bei nicht aktiviertem Verbraucher der Antriebsmotor bei seiner Nenn-Drehzahl betrieben wird. Durch den steilen Drehmomentanstieg des Antriebsmotors sinkt die Drehzahl des Antriebsmotors bei voll aktiviertem Verbraucher am Nebenabtrieb, wobei das Drehmoment des Antriebsmotors steigt, wodurch ein plötzliches Stehenbleiben des Antriebsmotors verhindert wird. Durch diese Auslegung wird beim reinen Fahrbetrieb das Fahrzeug in einem ungünstigen Wirkungsgradbereich bewegt, was einen erhöhten Kraftstoffverbrauch zur Folge hat.

Die DE 691 26 327 T2 offenbart ein elektrohydraulisches Steuergerät für einen Antriebsstrang eines Fahrzeugs, welches eine Primärkupplung, welche zwischen dem Antriebsmotor und dem Drehmomentwandler angeordnet ist, in Abhängigkeit von einem Bremsventil steuert, wodurch mehr Leistung des Antriebsmotors bei definierten Betriebszuständen der Arbeitshydraulik zur Verfügung steht.

Der vorliegenden Erfindung liegt die Aufgabe zugrunde, einen Antriebsstrang für ein Mobilfahrzeug mit einem Verbrennungsmotor und einem Drehmomentwandler sowie einem Nebenabtrieb zu schaffen, welcher sich durch einen geringen Kraftstoffverbrauch auszeichnet.

Die Aufgabe wird mit einem, auch die kennzeichnenden Merkmale des Hauptanspruchs aufweisenden, gattungsgemäßen Antriebsstrang für Mobilfahrzeuge gelöst.

Erfindungsgemäß weist der Antriebsstrang für ein Mobilfahrzeug einen Verbrennungsmotor auf, welcher über eine Primärkupplung mit einem hydrodynamischen Drehmomentwandler verbunden ist, welcher ein Untersetzungsgetriebe antreibt. Der Verbrennungsmotor mit seinem Drehmomentwandler ist optimiert auf den Fahrantrieb ausgelegt, wodurch sich der Antriebsmotor beim Festbremspunkt des Fahrzeugs, somit bei stehendem Fahrzeug und sich unter Vollast befindlichem Antriebsmotor, nahe zu seinem maximalen Drehmoment befindet, wobei bei diesem Festbremspunkt der Verbraucher am Nebenabtrieb nicht aktiviert ist. Der Antriebsmotor wird somit beim Fahrantrieb bei deutlich geringeren Drehzahlen betrieben, was den Kraftstoffverbrauch senkt. Vorzugsweise wird ein Antriebsmotor mit einem flachen Drehmomentanstieg, beispielsweise 15 %, verwendet. Der Antriebsmotor befindet sich vorzugsweise im Festbremspunkt im Bereich von ca. 1 700 U/min. Vorzugsweise wird ein Wandler mit höherer Drehmomentaufnahme verwendet, wodurch sich ein geringerer Wandlerschlupf ergibt, was sich zusätzlich vorteilhaft auf den Kraftstoffverbrauch auswirkt. Um zu verhindern, dass der Antriebsmotor durch Aktivieren des Nebenabtriebs über sein maximales Drehmoment belastet wird, was ein Stillsetzen des Antriebsmotors zur Folge hätte, wird die Primärkupplung in Abhängigkeit vom Betriebszustand des Antriebsmotors im Öffnungssinne so weit betätigt, dass der Betrieb des Antriebsmotors sichergestellt bleibt. In diesem Betriebszustand, mit rutschender Primärkupplung, ergibt sich eine geringere Zugkraft als bei geschlossener Primärkupplung. Um bei rutschender Primärkupplung gleiche Zugkräfte zu erreichen wie bei vergleichbaren Antrieben ohne Primärkupplung, könnte im Lastschaltgetriebe eine weitere Untersetzungsstufe geschaltet werden. Diese zusätzliche Gangstufe wird nur dann gebraucht, wenn der Verbraucher angesteuert wird.

In einer weiteren Ausgestaltungsform wird die Primärkupplung immer beim Aktivieren des Verbrauchers so weit im Öffnungssinne betätigt, dass eine definierte Drehzahl am Verbraucher gewährleistet ist. Es besteht die Möglichkeit, eine elektronische Steuereinheit mit Sensoren, welche beispielsweise den Betriebszustand des Antriebsmotors sowie den Betriebszustand der Primärkupplung und den Betriebszustand des Getriebes sowie den Betriebszustand des Verbrauchers erkennen, zu verbinden und in Abhängigkeit dieser Signale die Primärkupplung so anzusteuern, dass der Antriebsmotor betriebssicher betrieben werden kann und der Verbraucher ausreichend Drehzahl zur Verfügung hat. Vorzugsweise bleibt die Primärkupplung bei nicht aktiviertem Nebenabtrieb vollständig geschlossen. Hierbei besteht die Möglichkeit, die Position des Gaspedals proportional als Lastsignal für den Antriebsmotor zu verwenden. Fährt beispielsweise ein Radlader bei voll betätigtem Gaspedal in eine Anhäufung von Schüttgut, so nimmt die Fahrgeschwindigkeit im Verhältnis zum Widerstand ab, bis das Fahrzeug stillsteht. Der Antriebsmotor wird hierbei nahe bis zu seinem maximalen Drehmoment gedrückt. Wird nun die Hubhydraulik und somit der Nebenabtrieb aktiviert, wird die Primärkupplung im Öffnungssinne von der elektronischen Steuerung so angesteuert, dass eine definierte Antriebsmotordrehzahl nicht unterschritten wird. Es besteht die Möglichkeit, dass im Lastschaltgetriebe in diesem Zustand eine weitere hohe Übersetzungsstufe geschaltet wird, damit die Zugkraft vergleichbar hoch bleibt, wie bei vergleichbaren Antrieben ohne Primärkupplung. Das Signal für die Aktivierung des Nebenabtriebs kann beispielsweise über Sensoren von den Bedienhebeln oder mit Sensoren an der Hydraulikpumpe des Nebenabtriebs erfolgen. In einer weiteren Ausgestaltungsform wird die Antriebsmotordrehzahl proportional zur Gaspedalstellung gesteuert, wobei die Zugkraft über ein kombiniertes Brems-Inch-Pedal reduziert werden kann. Hierbei besteht die Möglichkeit, das Brems-Inch-Pedal so auszugestalten, dass es mindestens zwei Bereiche aufweist, wobei im ersten Bereich des Betätigungsweges nur die Zugkraft über die Primärkupplung reduziert wird und in einem weiteren zweiten Bereich des Betätigungsweges die Betriebsbremse proportional steigend angesteuert wird. Dabei wird die Primärkupplung immer weiter gelöst. Durch die Verwendung dieser zusätzlichen Funktion wird beispielsweise ein Zurückrollen an einer Steigung verhindert.

Somit wird durch die vorliegende Erfindung ein Antriebsstrang für ein Mobilfahrzeug geschaffen, welcher sich durch einen geringen Kraftstoffverbrauch auszeichnet, indem der Antriebsmotor und der hydrodynamische Wandler optimal auf den Fahrantrieb ausgelegt sind, und die Primärkupplung eine zusätzliche Leistungsabnahme über einen Nebenabtrieb ermöglicht.

Weitere Merkmale sind der Figuren-Beschreibung zu entnehmen.

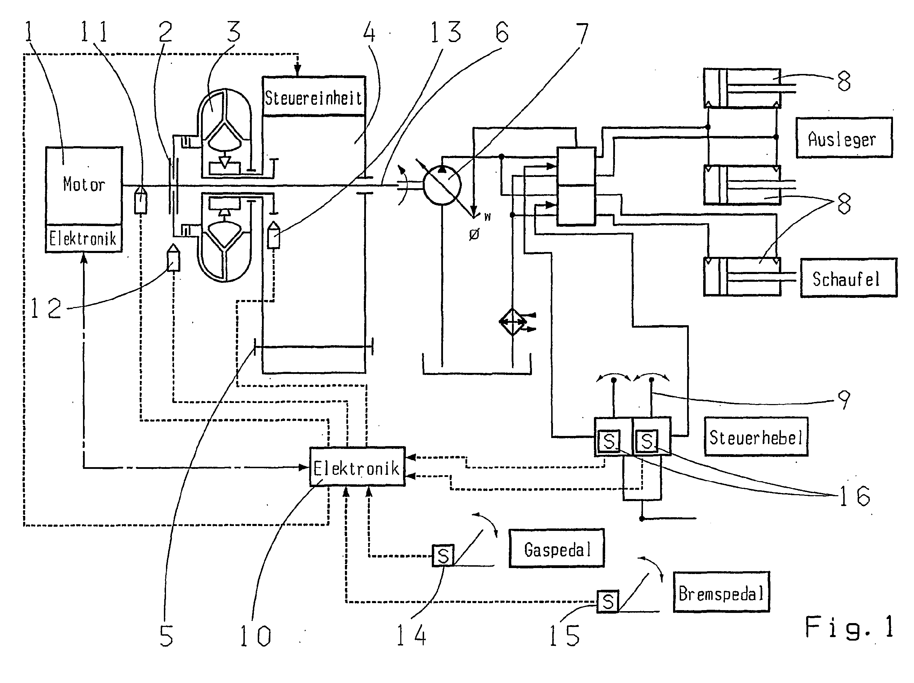

Die einzige Figur zeigt einen Antriebsmotor 1, welcher als Verbrennungsmotor ausgestaltet ist, welcher über eine Primärkupplung 2 mit einem hydrodynamischen Wandler 3 verbunden ist. Der Abtrieb des hydrodynamischen Wandlers ist mit einem schaltbaren Untersetzungsgetriebe 4 verbunden, dessen Abtrieb 5 mit nicht gezeigten Antriebsrädern des Mobilfahrzeugs verbunden ist. Über einen Nebenabtrieb 6 ist ein Verbraucher 7 direkt mit dem Antriebsmotor 1 verbunden. Der Verbraucher 7 ist als Zahnradpumpe oder verstellbare hydraulische Axialkolbenpumpe ausgebildet und versorgt hydraulische Zylinder 8, wie bespielsweise die Hubzylinder einer Schaufel eines Radladers. Die hydraulischen Zylinder 8 können über Stellhebel 9 aktiviert werden. Eine elektronische Steuereinheit 10 erfaßt von einem Sensor 11 die Drehzahl des Antriebsmotors 1, von einem Sensor 12 den Betriebszustand der Primärkupplung 2, von einem Sensor 13 die Abtriebsdrehzahl des hydrodynamischen Wandlers 3, von einem Sensor 14 die Pedalstellung des Gaspedals, von einem Sensor 15 die Pedalstellung des Bremspedals und von Sensoren 16 die Hebelstellung der Stellhebel 9. Es besteht die Möglichkeit, den hy-drodynamischen Wandler 3 mit einer Wandlerüberbrückungskupplung in Wirkverbindung zu bringen, welche ab einem definierten Betriebszustand des hydrodynamischen Wandlers 3 öffnet bzw. schließt. Befindet sich beispielsweise ein Radlader auf Transportfahrt, so erkennt die elektronische Steuereinheit 10 über die Sensoren 16, dass die hydraulischen Zylinder nicht aktiviert sind und hält die Primärkupplung 2 geschlossen. Hierdurch werden der Antriebsmotor 1 und der hydrodynamische Wandler 3 mit einem optimierten Wirkungsgradbereich betrieben, da der hydrodynamische Wandler 3 und der Antriebsmotor 1 im Festbremspunkt so ausgelegt sind, dass der Antriebsmotor 1 sich bei einer reduzierten Drehzahl im Bereich seines maximalen Drehmoments befindet. Wird das Hubwerk der Schaufel bei einem Radlader betätigt, so erkennt die elektronische Steuereinheit 10 über die Sensoren 16 die Betätigung der Stellhebel 9, so steuert die elektronische Steuereinheit die Primärkupplung 2 in Abhängigkeit vom Betriebszustand des Antriebsmotors 1, welchen sie über den Sensor 11 und den Sensor 14 erkennt, so an, dass entweder eine definierte Drehzahl des Nebenabtriebs 6 erhalten bleibt oder der Antriebsmotor 1 nicht unterhalb eines definierten Drehzahlniveaus sinkt. Erkennt die elektronische Steuereinheit 10 über den Sensor 15, dass das Bremspedal betätigt wird, so wird die Primärkupplung 2 von der elektronischen Steuereinheit 10 im Öffnungssinne angesteuert. Hierbei besteht die Möglichkeit, in einem ersten Wegbereich des Bremspedals nur die Zugkraft über die Primärkupplung 2 zu reduzieren und in einem weiteren Wegbereich des Bremspedals eine nicht gezeigte Betriebsbremse steigend im Schließsinne anzusteuern.

Somit ist es möglich, den Antriebsstrang kraftstoffsparend zu betreiben.

### Bezugszeichen

- 1: Antriebsmotor
- 2: Primärkupplung
- 3: hydrodynamischer Wandler
- 4: Untersetzungsgetriebe
- 5: Abtrieb
- 6: Nebenabtrieb
- 7: Verbraucher
- 8: hydraulische Zylinder
- 9: Stellhebel
- 10: elektronische Steuereinheit
- 11: Sensor
- 12: Sensor
- 13: Sensor
- 14: Sensor
- 15: Sensor
- 16: Sensor

## Patentansprüche

1. Antriebsstrang für ein Mobilfahrzeug mit einem Verbrennungsmotor (1), welcher über einen hydrodynamischen Drehmomentwandler (3) ein Untersetzungsgetriebe (4) antreibt, wobei sich zwischen dem Verbrennungsmotor (1) und dem hydrodynamischen Drehmomentwandler (3) eine im Offnungs- und Schließsinne betätigbare Primärkupplung (2) befindet, mit einem Nebenabtrieb (6), welcher mit dem Verbrennungsmotor (1) in Verbindung steht und einen Verbraucher (7) antreibt, **dadurch gekennzeichnet, dass** der Drehmomentwandler (3) und der Verbrennungsmotor (1) so ausgelegt sind, dass das Drehmoment des Verbrennungsmotors (1) bei Volllast und stehendem Fahrzeug, dem so genannten Festbremspunkt, und bei im Schließsinne betätigter Primärkupplung (2) und nicht aktiviertem Verbraucher (7), in der Nähe des maximalen Drehmomentes des Verbrennungsmotors liegt, wobei durch die Aktivierung des Verbrauchers (7) das Drehmoment des Verbrennungsmotors sich verringern wurde, und die Primärkupplung im Öffnungssinne so betätigt wird, dass der Verbrennungsmotor (1) oberhalb seines Stillsetzens betrieben wird.

2. Antriebsstrang nach Anspruch 1, **dadurch gekennzeichnet, dass** die Primärkupplung (2) bei aktiviertem Verbraucher (7) so weit im Öffnungssinne betätigt wird, dass der Verbrennungsmotor (1) eine definierte Drehzahl annimmt

3. Antriebsstrang nach Anspruch 1, **dadurch gekennzeichnet, dass** bei aktiviertem Verbraucher (7) und betätigter Betriebsbremse die Primärkupplung (2) vollständig im Öffnungssinne betätigt ist.

4. Verfahren zum Betätigen einer Primärkupplung (2) in einem Antriebsstrang für ein Mobilfahrzeug mit einem Verbrennungsmotor (1), welcher über einen Drehmomentwandler (3) ein Untersetzungsgetriebe (4) antreibt, wobei sich zwischen dem Antriebsmotor (1) und dem Drehmomentwandler (3) eine im Öffnungssinne und Schfießsinne betätigbare Primärkupplung (2) befindet, mit einem Nebenabtrieb (6), welcher mit dem Antriebsmotor (1) in Verbindung steht und einen Verbraucher (7) antreibt, **dadurch gekennzeichnet, dass** der Drehmomentwandler (3) so ausgelegt ist, dass der Verbrennungsmotor (1) bei Volllast und nicht aktiviertem Verbraucher (7) und stehendem Fahrzeug, dem so genannten Festbremspunkt, in der Nähe seines maximalen Drehmomentes betrieben wird, und die Primärkupplung (2) bei Betätigung des Verbrauchers (7) mit einem daraus resultierenden Absinken des Drehmoments des Verbrennungsmotors im Offnungssinne so weit betätigt wird, dass der Verbrennungsmotor (1) nicht unter sein mindestens benötigtes Drehmoment absinkt.

5. Verfahren zum Betätigen einer Primärkupplung (2) nach Anspruch 4, **dadurch gekennzeichnet, dass** der Drehmomentwandler (3) so ausgelegt ist, dass der Verbrennungsmotor (1) bei Volllast und nicht aktiviertem Verbraucher (7) und stehendem Fahrzeug, dem so genannten Festbremspunkt, bei oder oberhalb seinem maximalen Drehmoment betrieben wird, und die Primärkupplung (2) bei betätigtem Verbraucher (7) im Öffnungssinne so weit betätigt wird, dass der Nebenabtrieb (6) eine definierte Drehzahl annimmt

6. Antriebsstrang nach Anspruch 1, **dadurch gekennzeichnet, dass** die Primärkupplung (2) beim Betätigen einer Betriebsbremse im Öffnungssinne betätigt wird.

7. Antriebsstrahg nach Anspruch 2, **dadurch gekennzeichnet, dass** bei rutschender Primärkupplung (2) eine größere Untersetzung im Untersetzungsgetriebe (4) geschaltet wird.

## Claims

1. Drive train for a mobile vehicle with an internal combustion engine (1) which drives a reduction gear (4) via a hydrodynamic torque converter (3), a primary clutch (2) being located between the internal combustion engine (1) and the hydrodynamic torque converter (3) which may be actuated in the opening and closing direction, with a power take-off (6) which is connected to the internal combustion engine (1) and drives a consumer (7), **characterised in that** the torque converter (3) and the internal combustion engine (1) are designed such that the torque of the internal combustion engine (1) under full load and when the vehicle is stationary, the so-called stall point, and when the primary clutch (2) is actuated in the closing direction and the consumer (7) is not activated, is close to the maximum torque of the internal combustion engine, it being possible for the torque of the internal combustion engine to be reduced by the activation of the consumer (7) and the primary clutch being actuated in the opening direction such that the internal combustion engine (1) is operated above its stopping point.

2. Drive train according to Claim 1, **characterised in that** the primary clutch (2) is actuated in the opening direction, when the consumer (7) is activated, to such an extent that the internal combustion engine (1) adopts a defined rotational speed.

3. Drive train according to Claim 1, **characterised in that** when the consumer (7) is activated and the service brake is actuated, the primary clutch (2) is actuated fully in the opening direction.

4. Method for actuating a primary clutch (2) in a drive train for a mobile vehicle with an internal combustion engine (1) which drives a reduction gear (4) via a torque converter (3), a primary clutch (2) being located between the drive motor (1) and the torque converter (3) which may be actuated in the opening direction and the closing direction, with a power take-off (6) which is connected to the drive motor (1) and drives a consumer (7), **characterised in that** the torque converter (3) is designed such that the internal combustion engine (1) under full load and when the consumer (7) is not activated and the vehicle is stationary, the so-called stall point, is operated close to its maximum torque, and when the consumer (7) is actuated, the primary clutch (2) is actuated, with a resulting drop in the torque of the internal combustion engine, in the opening direction to such an extent that the internal combustion engine (1) does not drop below its minimum required torque.

5. Method for actuating a primary clutch (2) according to Claim 4, **characterised in that** the torque converter (3) is designed such that the internal combustion engine (1) under full load and when the consumer (7) is not activated and when the vehicle is stationary, the so-called stall point, is operated at or above its maximum torque and when the consumer (7) is actuated, the primary clutch (2) is actuated in the opening direction, to such an extent that the power take-off (6) adopts a defined rotational speed.

6. Drive train according to Claim 1, **characterised in that** the primary clutch (2) is actuated when a service brake is actuated in the opening direction.

7. Drive train according to Claim 2, **characterised in that** with a slipping primary clutch (2) a greater gear reduction is engaged in the reduction gear (4).

## Revendications

1. Chaîne cinématique de véhicule automobile, dotée d'un moteur à combustion interne (1) qui entraîne par un convertisseur hydrodynamique (3) de couple de rotation une transmission réductrice (4), un accouplement primaire (2) apte à être actionné dans le sens de l'ouverture et dans le sens de la fermeture étant disposé entre le moteur à combustion interne (1) et le convertisseur hydrodynamique (3) de couple de rotation, une partie entraînée secondaire (6) étant reliée au moteur à combustion interne (1) et entraînant un consommateur (7), **caractérisée en ce que** le convertisseur (3) de couple de rotation et le moteur à combustion interne (1) sont conçus de telle sorte qu'à pleine charge lorsque le véhicule à l'arrêt, à savoir au point de freinage dit stationnaire, et lorsque l'accouplement primaire (2) est actionné dans le sens de la fermeture et que le consommateur (7) n'est pas activé, le couple de rotation du moteur à combustion interne (1) est situé à proximité du couple de rotation maximum du moteur à combustion interne, l'activation du consommateur (7) diminuant le couple de rotation du moteur à combustion interne et l'accouplement primaire étant actionné dans le sens de l'ouverture de telle sorte que le moteur à combustion interne (1) fonctionne au-dessus de son calage.

2. Chaîne cinématique selon la revendication 1, **caractérisée en ce que** lorsque le consommateur (7) est activé, l'accouplement primaire (2) est actionné dans le sens de l'ouverture suffisamment pour que le moteur à combustion interne (1) prenne un régime défini.

3. Chaîne cinématique selon la revendication 1, **caractérisée en ce que** lorsque le consommateur (7) est activé et que le frein de roulage est actionné, l'accouplement primaire (2) est actionné complément dans le sens de l'ouverture.

4. Procédé d'actionnement d'un accouplement primaire (2) dans la chaîne cinématique d'un véhicule automobile qui présente un moteur à combustion interne (1) qui entraîne par un convertisseur hydrodynamique (3) de couple de rotation une transmission réductrice (4), un accouplement primaire (2) apte à être actionné dans le sens de l'ouverture et dans le sens de la fermeture étant disposé entre le moteur à combustion interne (1) et le convertisseur hydrodynamique (3) de couple de rotation, une partie entraînée secondaire (6) étant reliée au moteur à combustion interne (1) et entraînant un consommateur (7), **caractérisé en ce qu'**à pleine charge, lorsque le consommateur (7) n'est pas activé et que le véhicule est à l'arrêt, à savoir au point appelé de freinage dit stationnaire, le convertisseur (3) de couple de rotation est conçu de telle sorte que le moteur à combustion interne (1), le moteur fonctionne à proximité de son couple de rotation maximum, et que lorsque le consommateur (7) est activé avec par conséquent une diminution du couple de rotation du moteur à combustion Interne, l'accouplement primaire (2) est actionné dans le sens de l'ouverture, suffisamment pour que le moteur à combustion interne (1) ne descende pas en dessous de son couple de rotation minimum nécessaire.

5. Procédé d'actionnement d'un accouplement primaire (2) selon la revendication 4, **caractérisé en ce que** le convertisseur (3) du couple de rotation est conçu de telle sorte que, lorsque le moteur à combustion interne (1) est à pleine charge, que le consommateur (7) n'est pas activé et que le véhicule est à l'arrêt, à savoir au point appelé de freinage fixe, il travaille à son couple de rotation maximum ou au-dessus de ce dernier et **en ce que** lorsque le consommateur (7) est activé, l'accouplement primaire (2) est actionné dans le sens de l'ouverture suffisamment pour que la partie secondaire entraînée (6) prenne un régime de rotation défini.

6. Chaîne cinématique selon la revendication 1, **caractérisée en ce que** l'accouplement primaire (2) est actionné dans le sens de l'ouverture lorsque le frein de roulage est actionné.

7. Chaîne cinématique selon la revendication 2, **caractérisée en ce que** lorsque l'accouplement primaire (2) patine, une réduction plus importante est sélectionnée dans la transmission réductrice (4).
